# EUROPEAN PATENT APPLICATION

(11) **EP 4 458 787 A1**
(43) Date of publication of application: **06.11.2024**
(21) Application number: 23171062.5
(22) Date of filing: 02.05.2023
(51) Int. Cl.: C04B 28/08

(54) **COMPOSITE PANEL ELEMENT**

(71) Applicant: Saint-Gobain Ecophon AB, 260 61 Hyllinge (SE)
(72) Inventor: BORGSTRÖM, Johan, 22457 Lund (SE); HOOSHMAND, Saleh, 25473 Ödåkra (SE); KARLSSON, Ola, 22241 Lund (SE); YAMMINE-MALESYS, Joumana, 92400 Courbevoie (FR)
(74) Representative: Saint-Gobain Recherche

(57) **Abstract**

The invention relates to a method for producing composite panel elements (1), said method comprising:
- providing a binder comprising
a) glass particles,
b) at least one slag, and
c) an activation system comprising at least one water-soluble calcium salt and at least one water-soluble alkali metal silicate or alkali metal carbonate compound,

- providing a fibre component,
- mixing at least components a) and b) of said binder with a said fibre component,
- forming the mixture into composite panel elements, and
- adding water to said fibre component or to said mixture or to said composite panel elements,
wherein the component c) of said binder is either mixed with the fibre component together with components a) and b) or added together with said water to said fibre component or to said mixture or to said composite panel elements.

## Description

The present invention relates to a method for producing a composite panel element and such a panel element. In preferred embodiments, the invention relates to producing an acoustical panel element.

### Background art

Elements comprising mineral wool may be used for a variety of purposes. For instance, the elements comprising mineral wool may constitute acoustical panel elements and may be formed as horizontally arranged ceiling tiles, vertically arranged baffle elements, wall mounted elements or free-standing screens. Alternatively, the elements may be formed as thermal insulation elements. The mineral wool may be in the form of glass, stone or slag wool.

The use of elements comprising mineral wool results in the generation of considerable amounts of waste.

The waste may be generated during manufacturing of the elements comprising mineral wool and may comprise rejected elements or removed sections during shaping of the elements.

Waste may also be generated during installation of a system of elements comprising mineral wool. The waste at this stage may comprise sections removed from elements during trimming or elements remaining after completed installation.

Finally, waste may be generated after end of life when the system of elements comprising mineral wool is demounted.

Conventionally, waste in the form of elements comprising mineral wool generated during manufacturing, installation or demounting after end of life has been difficult to recycle in an efficient manner.

Another type of well-known panel element is the so-called wood-wool cement board. This type of panel element is made of ordinary Portland cement mixed with wood-wool, for instance spruce-wood wool. The wood-wool cement board has thermal insulating and sound absorbing properties, and also exhibit resistance to biodegradation and fire. However, some wood extractives, such as sugar, may have a negative impact on the setting of the cement and thereby result in boards with poor mechanical properties. Also, the wood-wool cement board has a high environmental impact since the cement component in the board is associated with a high CO₂ footprint.

### Summary of the invention

In view of that stated above, it is an object of the present invention to provide a method for recycling waste, for instance waste in the form of elements comprising mineral wool generated during manufacturing, installation or demounting after end of life. It is also an object to provide a method for producing composite panel elements from waste, especially from recycled mineral wool and to provide a corresponding composite panel element.

To achieve at least one of the above objects and also other objects that will be evident from the following description, a method for producing composite panel elements defined in claim 1 and a composite panel element defined in claim 12 are provided according to the present invention. Preferred embodiments will be evident from the dependent claims.

As explained throughout the specification, the steps do not necessarily happen in the order listed. For instance, water may be added before the mixing step (to the fibre component), and/or during the mixing step, and/or between the mixing step and the forming step (water being added to the mixture), and/or during the forming step, and/or after the forming step (water being added to the composite panel elements). In the present specification, the "mixing step" is understood to be the step of mixing the fibre component with the binder (or with components a) and b) of the binder) and the "forming step" is understood to be the step of forming the mixture into composite panel elements.

The binder used in the method is preferably at least partly in dry form, i.e. pulverulent, or in powdered (or powder) form. After hardening, the binder is no longer pulverulent. It is called "hardened binder" in the present specification. This hardened binder binds the fibres of the fibre component in the composite panel element.

In one embodiment, components a), b) and c) of the binder (i.e., the whole binder) are mixed with the fibre component during the mixing step. The binder is in that case preferably in dry form.

In another embodiment, elements a) and b) of the binder (i.e., glass particles and slag) are mixed with the fibre component and the activation system (component c)) of the binder is added together with the water to the fibre component, or the mixture or to the composite panel elements. In this embodiment, the activation system is preferably pre-dissolved in water before water addition.

The binder comprises glass particles. It may contain several types of these glass particles. The chemical composition of the glass particles preferably comprises at least 40wt% SiO₂.

The glass particles are advantageously obtained by milling glass cullet or by milling mineral wool, such as glass wool or stone wool. The method may therefore comprise a preliminary step of milling (or grinding) glass cullet or mineral wool.

Glass cullet is for example recycled glass used for bottles or jars. Its chemical composition typically comprises 60-75wt% SiO₂, 8-20wt% CaO+MgO, 10-15wt% Na₂O, 0-5wt% K₂O, 0-3wt% Al₂O₃ and 0-2wt% Fe₂O₃.

The mineral wools usually comprise a binder (hereafter called, if needed, "wool binder" to distinguish it from the "binder" previously mentioned) which used to be based on phenolic resins, but which has been replaced recently with binders based on raw materials derived from renewable resources and in particular comprising sugar-based resins, the amount of said resins being quite high. However, sugar is a cement setting retarder, and also leads to a significant reduction in the mechanical strength and in the abrasion resistance of the agglomerates. Yet, according to the invention, it is possible to directly use waste from fibres sized by sugar-based resins, without needing to modify the binder system, the selected activation system in particular compensating the retarding effects that may be induced by the sugars present in the mineral wool binder.

Alternatively, the method may comprise an additional step where the wool binder is neutralized. The neutralization of the wool binder may be by removal of the binder from the mineral wool, for instance by a washing process or a heating process. Alternatively, the neutralization may be performed by adding an agent inhibiting the negative impact of the binder. Thus, the neutralization step is dependent on the specific type of binder at hand. For instance, for a binder in the form of a phenol formaldehyde urea resin, neutralization of the binder may be best achieved by a heating process in which the binder is burnt.

Glass particles may be obtained by milling mineral wool or mineral wool fragments. The "mineral wool fragments" are understood to mean all the residues of products comprising mineral wool. These residues may be derived from the production of mineral wool. They may also be derived from finished products comprising mineral wool panels, such as for example the glass wool panels used in ceilings or walls. The fragments are preferably obtained from used panels, obtained from renovation or deconstruction works. The mineral wool fragments are preferably made by shredding mineral wool wastes. The invention is therefore particularly useful in that it makes it possible to recycle such products.

The method can therefore comprise a preliminary step of milling (or grinding) mineral wool or mineral wool fragments. Such milling may be performed such that the binder comprises mineral wool fibre fragments having an average fibre length in the range of 20 - 500 µm, preferably 20 - 150 µm, more preferably 30 - 60 µm, and an average mineral wool fibre width in the range of 1 - 25 µm, more preferably 2 - 10 µm.

Mineral wool or mineral wool fragments are preferably milled together with the slag, in order to improve the mechanical properties of the panel. Without wishing to be bound by any theory, it seems that the co-milling of mineral wool fragments with harder hydraulic binder particles makes it possible to improve the cutting of the fibres and therefore to obtain finer particles, which are more reactive. The alkali-silica reaction between the fibres and the hydraulic binder is also avoided, reducing the occurrence of cracking of the binder after hardening. In addition, the length/diameter ratio of the obtained particles of mineral wool is strongly reduced, and can be less than 3, so that the particles can no longer be considered as fibres. This allows to use mineral wool coming from demolition of old buildings, that used fibres which did not comply with the current biopersistence requirements.

The glass particles obtained by milling mineral wool preferably have a chemical composition comprising 30-75wt% SiO₂, 5-40wt% CaO+MgO, 0-20wt% Na₂O+K₂O, 0-30wt% Al₂O₃ and 0-15wt% Fe₂O₃. The glass particles obtained by milling glass wool preferably have a chemical composition comprising 50-75wt% of SiO₂, 12-20wt% Na₂O+K₂O, 5-20wt% CaO+MgO, 0-8wt%, in particular 0-3wt% Al₂O₃ and 2-10wt% B₂O₃. The glass particles obtained by milling stone wool preferably have a chemical composition comprising 40-55wt% SiO₂, 10-26wt% Al₂O₃, 15-40wt% CaO+MgO, 0-5wt% Na₂O+K₂O and 3-15wt% Fe₂O₃.

The mineral wool preferably comprises 0.1 to 10wt%, even 0.5 to 8wt% of an organic binding composition, especially comprising a sugar.

The term "sugar" is understood to mean carbohydrates such as monosaccharides, disaccharides, oligosaccharides, polysaccharides, including sugar alcohols, and mixtures thereof. Sugar-based binding compositions used for mineral wool are in particular described in applications US 2010/0282996, US 2012/0263934, WO 2012/168619 or WO 2012/168621. The binding composition/wool binder included in the mineral wool (and in the mineral wool fragments and granules) generally represents 0.1% to 10% by weight, and more particularly 0.5% to 7% by weight in dry, with respect to the total weight of the dry mineral wool fragments, the sugar(s) (or sugar-based resin(s)) being present in the binding (or sizing) composition in a proportion of 30 to 90% by weight of the dry binding composition.

The binder contains at least one slag. It may contain several types of slags.

At least one, and preferably the or each, slag is preferably selected from blast furnaces slags, basic oxygen furnace slags, electric arc furnace slags, by-products from the manufacturing of sponge iron and ladle slags.

The chemical composition of the slag preferably comprises more than 30wt% CaO and less than 40wt% SiO₂.

The total amount of Portland cement, calcium aluminate cement and calcium sulfoaluminate cement is preferably less than 35 wt% with respect to the weight of binder, especially less than 10 wt%, with respect to the weight of binder. In a particularly preferred embodiment, the binder is devoid of Portland cement, calcium aluminate cement and calcium sulfoaluminate cement.

Slags are, in the steel industry, the scoria formed during the melting or elaboration of metal and metallic alloys by liquid means, said slags being mixtures essentially composed of silicates, aluminates and lime.

The slag is more preferably ladle slag. Ladle slags are derived from (or obtained during) the production of stainless steel. In said production, the final phase of the metallurgical operation by which stainless steel is produced takes place in a continuous casting ladle, where a molten layer of slag (the ladle slag) is maintained on top of the liquid metal, serving to prevent its oxidation and minimize heat losses, as well as ensuring the desired alloy composition.

Ladle slag has proven particularly useful especially because of its mineralogy, since it contains useful crystalline phases such as C3A, C12A7 and C2S.

The total amount of glass particles and slags is preferably 50-99wt%, especially 75-98wt% with respect to the weight of the binder. The weight ratio between the total amount of glass particles and the total amount of slag preferably ranges from 10:90 to 90:10, especially from 30:70 to 70:30, even from 40:60 to 60:40.

The binder comprises an activation system. The terms "activation system" within the invention defines a system comprising at least one compound intended to improve the setting and/or hardening of the binder. As explained before, the activation system is either mixed (usually in dry form) with the fibre component together with the other components of the binder, or the activation system is added together with water (and in that case often pre-dissolved in the water).

The activation system comprises (or even consists of) at least one water-soluble calcium salt and at least one alkali metal silicate or alkali metal carbonate compound. Preferably, the activation system comprises (or even consists of) at least one water-soluble calcium salt and at least one alkali metal silicate compound. This activation system has proven to be particularly useful in compensating for delayed setting or hardening when the mineral wool used to obtain the glass particles comprises organic binders, especially sugars.

The alkali metal silicate is in particular a silicate of an alkali metal chosen from potassium, lithium and/or sodium, notably is selected from sodium silicate, sodium metasilicate, potassium silicate, potassium metasilicate, lithium silicate, lithium metasilicate and mixtures thereof. Preferably the alkali metal silicate is selected from sodium silicate, sodium metasilicate and mixtures thereof. Sodium metasilicate is particularly preferred.

The water-soluble calcium salt is in particular selected from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulfide, calcium hydroxide, calcium sulfamate and mixtures thereof. Preferably, the calcium salt is selected from calcium hydroxide, calcium nitrate and mixtures thereof. Calcium hydroxide is particularly preferred.

The weight ratio of the amount of the calcium salt over the amount of the alkali metal silicate in the activation system is preferably between 0.2 and 2, especially between 0.5 and 1.5, more preferably around 1 (the system comprising in this case as much calcium salt as alkali metal silicate). A preferred activation system consists of sodium (meta)silicate and calcium hydroxide.

The amount of activation system is preferably 1 to 50wt%, especially 2 to 40wt%, even 4 to 30wt% or 6 to 20wt%, with respect to the weight of binder.

All combinations of glass particles, slags and activation system are possible, and cannot be listed herein for the sake of brevity. Preferred combinations include glass particles obtained by milling glass wool or stone wool, ladles slag (or electric arc furnace slags) and an activation system comprising sodium (meta)silicate and calcium hydroxide.

The particles of the binder preferably have a particle size distribution in volume such that their D90 is less than 200 µm. Preferably, the D90 is less than 100 µm, or less than 70 µm, even less than 50 µm or than 40 µm and/or more than 10 µm. The particle size distribution is preferably measured by laser granulometry in accordance with ISO 13320:2009.

The fibre component is preferably a wood fibre component, a polymer fibre component and/or a mineral wool component.

The weight ratio between the amount of binder and the amount of fibre component preferably ranges from 40:60 to 95:5, especially from 50:50 to 90:10, even from 60:40 to 85:15. When high fire resistance is expected, this ratio is preferably from 70:30 to 90:10.

The composite panel element preferably comprises a layer comprising a fibre component and a hardened binder, wherein the layer has a density in the range of 20 - 1000 kg/m³, especially 20 - 400 kg/m³, and a thickness in the range of 5 - 75 mm. The layer preferably has a porosity in the range of 0,75-0,99.

The presence of the fibre component and the porosity of layer of the panel element ensures a relatively low density, preferably in the range of 20 - 400 kg/m³, which makes the panel element useful in various systems, such as a suspended ceiling system.

The presence of a fibre component and the porosity of the layer of the composite panel element also results in a product having good sound absorbing properties.

According to an embodiment, the mineral wool may be glass or stone wool.

According to another embodiment, the fibre component, which may be obtained from a recycled material, may be a wood fibre component, such as a wood-wool component, a polymer fibre component, such as a PET fibre component, and/or a mineral wool component. If two or more types of fibres are used, the fibre types may have substantial different fibre diameter or cross section thereby creating a double porosity structure in the panel element improving the sound absorbing property.

The fibre component in the form of wood wool may have a fibre length in the range of 80 - 250 mm, a fibre width in the range of 2 - 12 mm and a fibre thickness in the range of 0,2 - 1 mm. The wood wool may be prewetted prior to mixing with the binder in order to avoid too much soaking of water added to harden the binder.

The composite panel element may comprise an additional layer comprising mineral wool. By adding an additional layer to the panel element, the sound absorbing properties of the panel element may be improved. The additional layer may be in the form of a recycled panel element comprising mineral wool. The additional layer may be arranged at a side of the panel element corresponding to a not visible side or a rear side of the panel element. The method may therefore comprise an additional step of arranging an additional layer at a side of the panel element.

The mixing of (at least components a) and b) of) the binder and the fibre component may be performed in batches or in a continuous process or in a combination thereof. For instance, the binder components (either a) and b) or a), b) and c)) may be mixed in batches, and subsequently mixed with the fibre component in a continuous process. Mixing is for example performed in a rotating drum. Before mixing, the addition of the binder components to the fibre component may be made for instance by spreading or spraying the binder components (at least a) and b), possibly c)) on the fibre component.

The hardening of the binder is a consequence of the addition of water. Water is indeed able to dissolve the binder components, which then precipitate in new water-insoluble crystalline phases to form a hardened binder able to bind the fibres of the fibre component. As explained before, in an embodiment, the activation system is added together with water, especially is pre-dissolved in water before it is added.

The hardening is preferably done at ambient temperature. It can also be done at a temperature of 40 to 150°C. The hardening time may be several hours, days or even weeks.

The mass ratio between water and the binder may be 0.1 to 0.5, preferably 0.2 to 0.35.

The water may be added prior, during or after the step of forming the mixture into composite panel elements. It can, alternatively or additionally, be added before or during the mixing step.

In a first embodiment, the water is added to the fibre component, i.e., before mixing with the binder (or with components a) and b) of the binder). For instance, the fibre component, such as wood wool, can be led through a water bath. Such a step makes it possible to clean the wood wool from any wood dust as well as to bring the water needed to ensure the hardening of the binder which is subsequently mixed with the fibre component.

In a second embodiment, the water is added to the mixture of the fibre component with the binder (or with components a) and b) of the binder).

In a third embodiment, the water is added to the composite panel elements.

All these embodiments may be combined one with another. For instance, water may be added to the fibre component (before mixing) as well as to the mixture.

The provision of a binder comprising ground or milled elements comprising mineral wool enables utilization of recovered waste generated during manufacturing, installation or demounting after end of life of elements comprising mineral wool.

The inclusion of a fibre component makes it possible to obtain a desired density of the panel element, such as in the range of 20 - 400 kg/m³.

The step of forming the mixture into panel elements may be performed as an intermittent moulding process or as a continuous feeding process.

An intermittent moulding process is made for instance by arranging the mixture in moulds and keep it therein until the binder is sufficiently hardened.

A continuous feeding process is for instance made by feeding the mixture onto a conveyor thereby forming an endless web which subsequently after sufficient hardening may be converted into panel elements of desired shape and size. The conversion into panel elements may comprise compressing steps.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

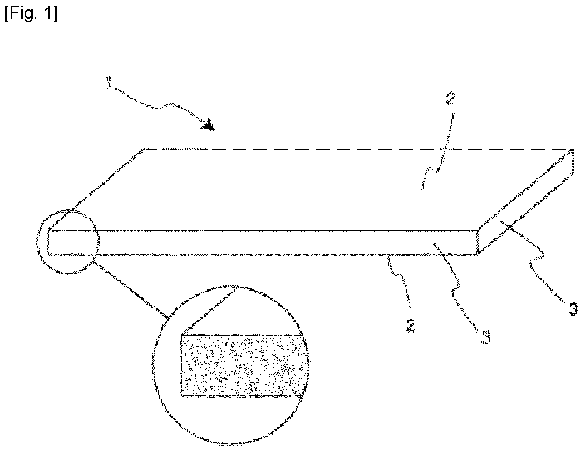

Fig. 1 is a schematic perspective view of a composite panel element in accordance with an embodiment.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The invention is based on the realization that elements comprising mineral wool may be recycled and used as a component in production of composite (especially acoustical) panel elements.

In Fig. 1, a panel element 1 is illustrated.

In the shown embodiment, the panel element 1 comprises two opposing major surfaces 2 and four side surfaces 3 extending between the two opposing major surfaces 2.

The panel element 1 may be used as a horizontally arranged ceiling tile, a vertically arranged baffle element, a wall mounted element or a free-standing screen.

In the shown embodiment, the panel element 1 comprises a single layer.

The layer of the panel element 1 may have a density in the range of 20 - 400 kg/m³.

The porosity of the layer of the panel element 1 may be in the range of 0,75 - 0,99. The porosity Ø, or the void fraction, of a material is a measurement of the empty space in a material and is calculated as the relationship between the volume of the void Vᵥ, i.e. the empty space in the material, and the total volume of the material V_{T} : Ø = V_{V} / V_{T}.

The porosity is thus a fraction between 0 and 1 and may also be represented in percent by multiplying the fraction by 100.

The layer of the panel element 1 may have a thickness in the range of 5 - 75 mm.

The layer of the panel element 1 comprises a fibre component and a hardened binder.

The fibre component is embedded in hardened binder as evident from the detached enlargement of Fig. 1 and may be a wood fibre, such as wood-wool, a polymer fibre, such as a PET fibre and/or a mineral wool component. The fibre component may be oriented or non-oriented. By using a fibre component comprising different types of fibres having substantial different fibre diameter or cross section area, such as wood-wool and mineral wool, a double porosity structure may be obtained improving the sound absorbing properties of the layer included in the panel element.

In accordance with the present invention, the composite panel element may comprise additional layers.

An additional layer may for instance comprise mineral wool. Hereby, the sound absorbing properties of the panel element may be further improved. In such a case, the layer comprising the fibre component and a geopolymer binder comprising ground mineral wool may have at thickness in the range of 5 - 20 mm and the additional layer may have a density in the range of 15 - 45 kg/m³. The additional layer may be obtained from recycled elements comprising mineral wool. The additional layer may be arranged on a side of the panel element corresponding to a not visible side of the panel element, i.e. a rear side of the panel element which is not intended to face a room when installed.

## Claims

1. A method for producing composite panel elements (1), said method comprising:
- providing a binder comprising
a) glass particles,
b) at least one slag, and
c) an activation system comprising at least one water-soluble calcium salt and at least one water-soluble alkali metal silicate or alkali metal carbonate compound,
- providing a fibre component,
- mixing at least components a) and b) of said binder with said fibre component,
- forming the mixture into composite panel elements, and
- adding water to said fibre component or to said mixture or to said composite panel elements,
wherein the component c) of said binder is either mixed with the fibre component together with components a) and b) or added together with said water to said fibre component or to said mixture or to said composite panel elements.

2. The method according to claim 1, wherein the glass particles are obtained by milling glass cullet or by milling mineral wool, such as glass wool, slag wool or stone wool.

3. The method according to any one of the preceding claims, wherein the chemical composition of the glass particles comprises at least 40 wt% SiO₂.

4. The method according to any one of the preceding claims, wherein at least one slag is selected from blast furnaces slags, basic oxygen furnace slags, electric arc furnace slags, by-products from the manufacturing of sponge iron and ladle slags.

5. The method according to any one of the preceding claims, wherein the binder is devoid of Portland cement, calcium aluminate cement and calcium sulfoaluminate cement.

6. The method according to any one of the preceding claims, wherein the weight ratio between the total amount of glass particles and the total amount of slag ranges from 10:90 to 90:10, especially from 30:70 to 70:30.

7. The method according to any one of the preceding claims, wherein the amount of activation system is 1 to 50 wt%, especially 2 to 30 wt%, with respect to the weight of binder.

8. The method according to any one of the preceding claims, wherein the alkali metal silicate compound is selected from sodium silicate, sodium metasilicate, potassium silicate, potassium metasilicate, lithium silicate, lithium metasilicate and mixtures thereof.

9. The method according to any one of the preceding claims, wherein the water-soluble calcium salt is selected from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulfide, calcium hydroxide, calcium sulfamate and mixtures thereof.

10. The method according to any one of the preceding claims, wherein the fibre component is a wood fibre component, a polymer fibre component and/or a mineral wool component.

11. The method according to any one of the preceding claims, wherein the weight ratio between the amount of binder and the amount of fibre component ranges from 40:60 to 95:5, especially from 50:50 to 90:10.

12. A composite panel element (1) able to be obtained by the method according to any one of the preceding claims, said composite panel element comprising a layer comprising a fibre component and a hardened binder.

13. The composite panel element (1) according to claim 12, wherein the layer has a density in the range of 20 - 1000 kg/m³, especially of 20 - 400 kg/m³, and a thickness in the range of 5 - 75 mm.

14. The composite panel element (1) according to any one of claims 12-13, wherein the layer has a porosity in the range of 0,75 - 0,99.

15. The composite panel element (1) according to any one of claims 12-14, further comprising an additional layer comprising mineral wool.
